# EUROPEAN PATENT APPLICATION

(11) **EP 3 422 270 A1**
(43) Date of publication of application: **02.01.2019**
(21) Application number: 17194314.5
(22) Date of filing: 02.10.2017
(51) Int. Cl.: G06Q 10/10

(54) **METHOD FOR PERFORMING MAIL DATA MANAGEMENT IN MAIL SYSTEM, AND ASSOCIATED APPARATUS**

(30) Priority: 29.06.2017 US 201715636655
(71) Applicant: Synology Incorporated, Taipei 103 (TW)
(72) Inventor: Pan, Yen-Chien, 103 Taipei (TW)
(74) Representative: Lahrtz, Fritz

(57) **Abstract**

A method and associated apparatus for performing mail data management in a mail system (10) are provided. The method may include: dividing mail data of a mail of a user into multiple portions of data to obtain a first partial header of a header of the mail and mail contents of the mail from the mail data of the mail; and when the first partial header and the mail contents of the mail are the same as that of at least one other mail of at least one other user, storing a second partial header of the header into a user folder corresponding to the user as individual mail data and storing the first partial header and the mail contents of the mail into a mail pool as common mail data, wherein the mail pool and the user folder are different folders of a file system of at least one server (100).

## Description

### Field of the Invention

The present invention relates to electronic mails (emails, which may be simply referred to as mails), and more particularly, to a method for performing mail data management in a mail system, and an associated apparatus.

### Background of the Invention

When a mail having multiple recipients is received by a mail system, the mail typically appears in each of the mail boxes of the recipients. Based on the design of the mail system, some problems may occur. For example, as each of the mail boxes of the recipients stores the mail, the overall storage space required for storing the mail in the mail boxes of the recipients, respectively, may be the single-mail data size (e.g. the data size of a single copy of the mail in one of the mail boxes of the recipients) multiplied by the number of recipients of the mail. In a situation where there are many multi-recipient mails with each multi-recipient mail having a lot of recipients, the storage space available for further mails in the mail system may decrease rapidly. Thus, a novel method and associated architecture is required for reducing mail data to improve the overall performance of the mail system.

### Summary of the Invention

This in mind, the application aims at providing a method and associated apparatus in order to solve the problems mentioned above.

This is achieved by a method for performing mail data management in a mail system and associated apparatus according to claims 1 and 11. The dependent claims pertain to corresponding further developments and improvements.

As will be seen more clearly from the detailed description following below, the claimed method includes: dividing mail data of a mail of a user into multiple portions of data to obtain a first partial header of a header of the mail and mail contents of the mail from the mail data of the mail, wherein the user is one of a plurality of users of the mail system, and the mail is accessed through the mail system; determining whether the first partial header and the mail contents of the mail are the same as that of at least one other mail of at least one other user within the plurality of users; and when the first partial header and the mail contents of the mail are the same as that of the at least one other mail of the at least one other user, storing a second partial header of the header into a user folder corresponding to the user as individual mail data and storing the first partial header and the mail contents of the mail into a mail pool as common mail data, wherein the mail pool and the user folder are different folders of a file system of the at least one server.

In addition, the claimed apparatus includes a processing circuit that is positioned in the at least one server, and the processing circuit is arranged to control the following operations of the mail system: dividing mail data of a mail of a user into multiple portions of data to obtain a first partial header of a header of the mail and mail contents of the mail from the mail data of the mail, wherein the user is one of a plurality of users of the mail system, and the mail is accessed through the mail system; determining whether the first partial header and the mail contents of the mail are the same as that of at least one other mail of at least one other user within the plurality of users; and when the first partial header and the mail contents of the mail are the same as that of the at least one other mail of the at least one other user, storing a second partial header of the header into a user folder corresponding to the user as individual mail data and storing the first partial header and the mail contents of the mail into a mail pool as common mail data, wherein the mail pool and the user folder are different folders of a file system of the at least one server.

### Brief Description of the Drawings

In the following, the invention is further illustrated by way of example, taking reference to the accompanying drawings. Thereof:
Fig. 1 is a diagram of a mail system according to an embodiment of the present invention;
Fig. 2 illustrates a multi-server configuration of the mail system shown in Fig. 1 according to an embodiment of the present invention;
Fig. 3 is a flowchart of a method for performing mail data management in a mail system according to an embodiment of the present invention;
Fig. 4 illustrates a control scheme of the method shown in Fig. 3 according to an embodiment of the present invention;
Fig. 5 illustrates a working flow of the method shown in Fig. 3 according to an embodiment of the present invention; and
Fig. 6 illustrates, in the lower half thereof, a mail data de-duplication mechanism of the control scheme shown in Fig. 4 according to an embodiment of the present invention, and further illustrates, in the upper half thereof, a mail data duplication mechanism.

Embodiments of the present invention provide a method for performing mail data management in a mail system, and provide an associated apparatus. The mail system may include at least one server (e.g. one or more servers, such as one or more network attached storage (NAS) devices, etc.). Based on the method, the apparatus may control the mail system to properly perform mail data management to prevent unnecessary waste of storage space in the mail system. As a result, the present invention method and apparatus can reduce mail data and/or prevent unnecessary data duplication, and therefore can guarantee the overall performance of the mail system.

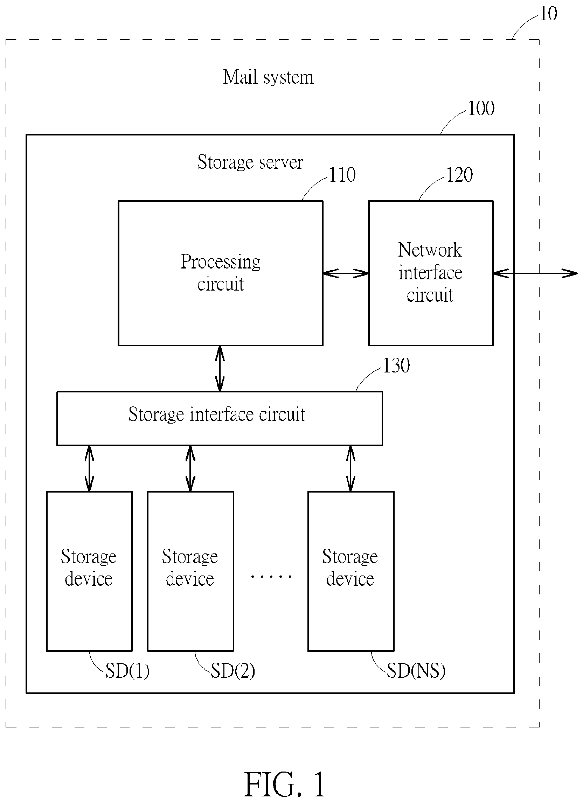

Fig. 1 is a diagram of a mail system 10 according to an embodiment of the present invention. The mail system 10 may be taken as an example of the aforementioned mail system. As shown in Fig. 1, the mail system 10 may include a storage server 100, which may be taken as an example of the aforementioned at least one server. The storage server 100 may include a processing circuit 110 (e.g. at least one processor, and associated circuits such as a chipset, a random access memory (RAM), etc.), a network interface circuit 120, a storage interface circuit 130, and at least one storage device (e.g. one or more storage devices) such as a set of one or more storage devices {SD(1), SD(2), ..., SD(NS)}, in which the notation "NS" may represent a positive integer. Examples of any storage device within the set of one or more storage devices {SD(1), SD(2), ..., SD(NS)} may include, but are not limited to: a hard disk drive (HDD) and a solid state drive (SSD). One or more program modules may run on the processing circuit 110 (more particularly, the processor thereof) to control operations of the storage server 100, for example, according to the method. In addition, a user of the mail system 10 may access the mail system 10 through a client device (not shown), and the client device and the mail system 10 may be coupled to each other through at least one network, in which wired and/or wireless network connections may be utilized.

According to this embodiment, the storage server 100 may be implemented as a NAS device, and the client device may be any of a multifunctional mobile phone, a laptop computer, a tablet, etc. For example, the user may access a specific storage server within the aforementioned at least one server, such as the storage server 100 of the mail system 10, after logging in to the specific storage server through a browser running on a processing circuit of the client device (more particularly, a processor thereof). In addition, the apparatus may include at least one portion (e.g. a portion or all) of the aforementioned mail system such as the mail system 10. For example, the apparatus may include a portion of the storage server 100, and more particularly, may include the processing circuit 110. In another example, the apparatus may include the whole of the storage server 100. In another example, the apparatus may include the whole of the mail system 10.

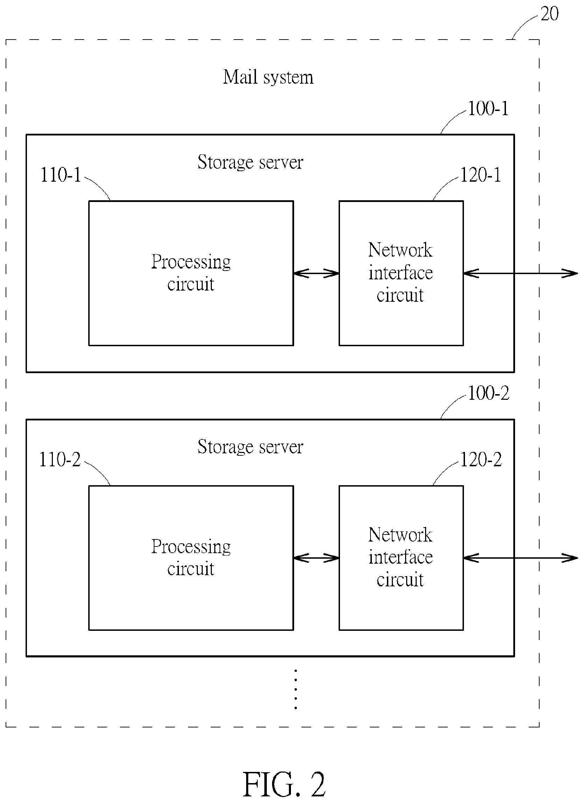

Fig. 2 illustrates a multi-server configuration of the mail system 10 shown in Fig. 1 according to an embodiment of the present invention. Based on the multi-server configuration, the aforementioned at least one server may include multiple storage servers 100-1, 100-2, ..., etc., any of which may be a copy of the storage server 100 shown in Fig. 1 or may have a similar architecture as that of the storage server 100, and the architecture shown in Fig. 2 may be referred to as the mail system 20, which may be taken as an example of the mail system 10 shown in Fig. 1. For example, the processing circuit 110-1 and the network interface circuit 120-1 may be the same as the processing circuit 110 and the network interface circuit 120 shown in Fig. 1, respectively, the processing circuit 110-2 and the network interface circuit 120-2 may be similar to the processing circuit 110 and the network interface circuit 120 shown in Fig. 1, respectively, and the storage server 100-1 may be implemented as a main storage server to control operations of the mail system 20, and more particularly, may control the mail system 20 to properly perform mail data management to prevent unnecessary waste of storage space in the mail system 20.

According to this embodiment, each of the storage servers 100-1, 100-2, ..., etc. may be implemented with a NAS device. For example, the user may access any of the storage servers 100-1, 100-2, ..., etc. after logging in to the main storage server through a browser running on the processing circuit of the client device (more particularly, the processor thereof). In addition, the apparatus may include at least one portion (e.g. a portion or all) of the aforementioned mail system such as the mail system 20. For example, the apparatus may include a portion of the storage server 100-1, and more particularly, may include the processing circuit 110-1. In another example, the apparatus may include the whole of the storage server 100-1. In another example, the apparatus may include the whole of the mail system 20.

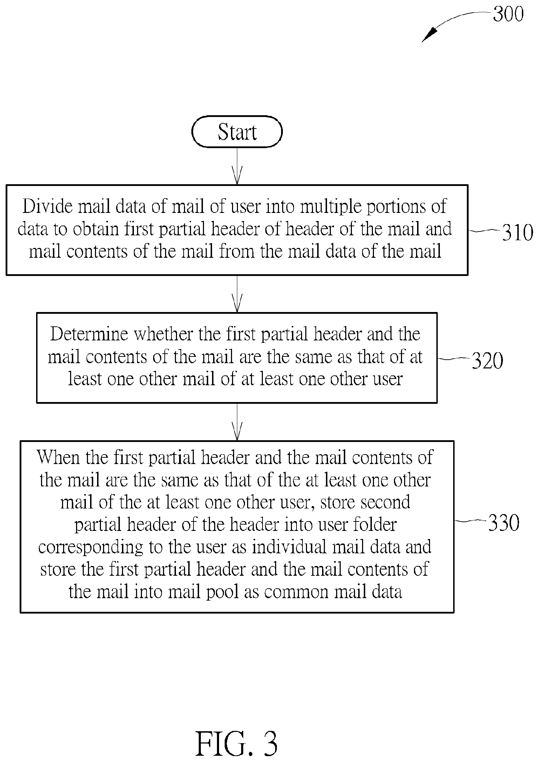

Fig. 3 is a flowchart of a method 300 for performing mail data management in a mail system according to an embodiment of the present invention. The method 300 may be taken as an example of the method mentioned above. The method 300 may be applied to the mail system 10 (e.g. the mail system 20, based on the multi-server configuration), and may be applied to the storage server 100 (e.g. the main storage server such as the storage server 100-1, based on the multi-server configuration) and the processing circuit 110 therein (e.g. the processing circuit of the main storage server, such as the processing circuit 110-1 of the storage server 100-1).

In Step 310, the processing circuit 110 may divide mail data of a mail of the user into multiple portions of data to obtain a first partial header (e.g. a major header) of a header of the mail and mail contents of the mail from the mail data of the mail. In this embodiment, the user may be one of a plurality of users of the mail system 10, and the mail may be accessed through the mail system 10.

In Step 320, the processing circuit 110 may determine whether the first partial header (e.g. the major header) and the mail contents of the mail are the same as that of at least one other mail (e.g. one or more other mails) of at least one other user (e.g. one or more other users) within the plurality of users. According to this embodiment, a sender of the mail may have assigned the user and the aforementioned at least one other user as multiple recipients of the mail being sent. As a result, the processing circuit 110 may determine that the first partial header (e.g. the major header) is the same as that of the aforementioned at least one other mail of the aforementioned at least one other user, and may determine that the mail contents of the mail are the same as that of the aforementioned at least one other mail of the aforementioned at least one other user.

In Step 330, when the first partial header (e.g. the major header) and the mail contents of the mail are the same as that of the aforementioned at least one other mail of the aforementioned at least one other user, the processing circuit 110 may store a second partial header (e.g. a minor header) of the header into a user folder corresponding to the user as individual mail data and store the first partial header (e.g. the major header) and the mail contents of the mail into a mail pool as common mail data. In this embodiment, the mail pool and the user folder may be different folders of a file system of the aforementioned at least one server such as the storage server 100.

For better comprehension, an example of some details of the mail may be shown below: 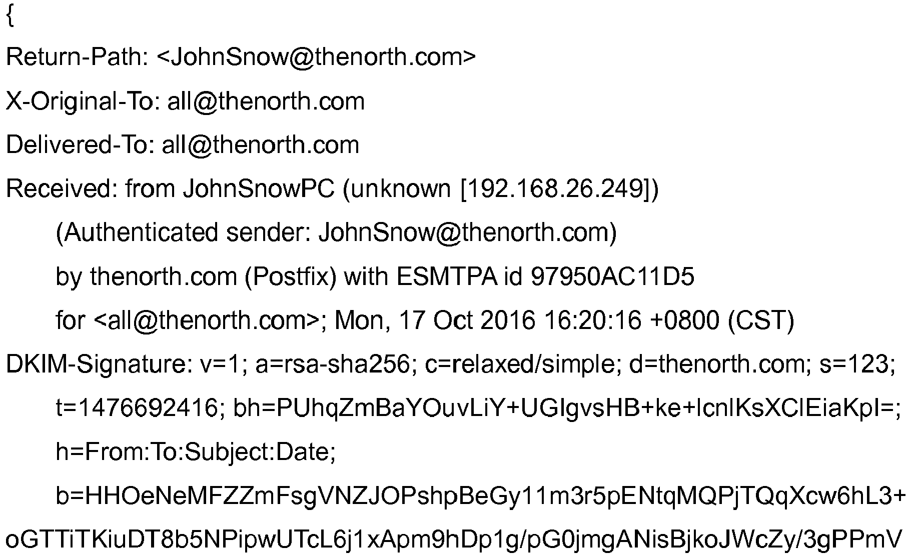 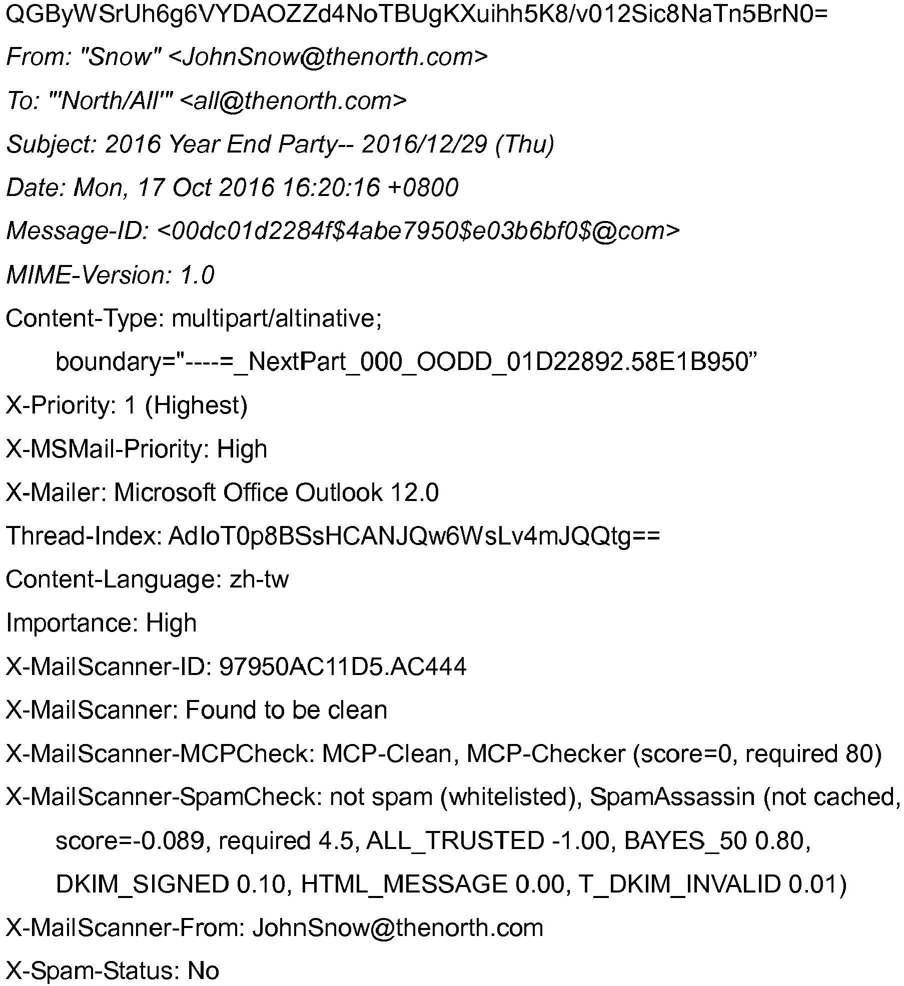 This is a multi-part message in MIME format.

```
 ------ =_NextPart_000_00DD_01D22892.58E1B950
 Content-Type: text/plain;
    charset="UTF-8"
    Content-Transfer-Encoding: quoted-printable
    Hello All,
    ...
    }
    in which:
```

(1). the intermediate section printed with the italic style (i.e. the section starting from *"From: "Snow"* <*JohnSnow*@*thenorth.com*>" and ending with *"MIME-Version: 1.0*") can be taken as an example of the major header;
(2). the beginning section above the intermediate section printed with the italic style can be taken as an example of the minor header; and
(3). the end section below the intermediate section printed with the italic style can be taken as an example of the mail contents of the mail;
but the present invention is not limited thereto. In some examples, the details of the mail may be altered. For brevity, partial information of the end section shown above is not illustrated, and the notation "..." at the end of the end section stands for the non-illustrated partial information.

According to this embodiment, the first partial header (e.g. major header) may include one or a combination of sender information of the sender of the mail (e.g. *"Snow"* and/or "<*JohnSnow*@*thenorth.com*>" in the intermediate section shown above), receiver information of at least one recipient of the mail (e.g. *"North*/*All"* and/or "<*all*@*thenorth.com*>" in the intermediate section, in which the mail address "<*all*@*thenorth.com*>" is directed to multiple persons, which may be taken as an example of the recipients), the subject of the mail (e.g. *"2016 Year End Party-- 2016*/*12*/*29 (Thu)"* in the intermediate section), and time information of time that the sender sends the mail (e.g. *"Mon, 17 Oct 2016 16:20:16* +*0800"* in the intermediate section). In addition, the second partial header (e.g. minor header) may include other information of the header, such as one or a combination of at least one mail scanning record (e.g. one or more mail scanning records), authentication information, and any mail delivery history. For example, the aforementioned other information of the header may include the aforementioned at least one mail scanning record, the authentication information, and the mail delivery history, but the present invention is not limited thereto. According to some embodiments, the second partial header (e.g. minor header) may include information regarding at least one operation that the aforementioned at least one server applies to the mail. For example, the storage server 100 may receive the mail and may add and/or update the second partial header (e.g. minor header) in the header of the mail to indicate the mail delivery history. According to some embodiments, the mail delivery history may vary in response to any change of the recipients, and the second partial header (e.g. minor header) in the header may vary in response to any change of the mail delivery history.

According to some embodiments, an incoming mail sent from outside the mail system 10 may include the mail of the user. Regarding the operation of Step 320, when the aforementioned at least one server (e.g. the storage server 100, or any other server in the mail system 10) receives the incoming mail from outside the mail system 10, the processing circuit 110 may be arranged to determine whether the first partial header (e.g. major header) and the mail contents of the mail are the same as that of the aforementioned at least one other mail according to the first partial header (e.g. major header). For example, the first partial header (e.g. major header) may include one or the combination of the sender information of the sender of the mail, the receiver information of the aforementioned at least one recipient of the mail, the subject of the mail, and the time information of the time that the sender sends the mail.

According to some embodiments, the processing circuit 110 may be arranged to analyze the first partial header (e.g. major header) and the mail contents of the mail to generate an analysis result. Based on a database of the mail system 10, the processing circuit 110 may be arranged to determine whether the first partial header (e.g. major header) and the mail contents of the mail are the same as that of the aforementioned at least one other mail of the aforementioned at least one other user according to the analysis result. For example, regarding the analysis result generated by analyzing the first partial header and the mail contents of the mail, at least one characteristic value (e.g. one or more characteristic values, such as one or a combination of a hash value and a checksum) of both of the first partial header and the mail contents of the mail is obtained by the processing circuit 110 (e.g. through hash value calculation and/or checksum calculation), in which the aforementioned at least one characteristic value may be utilized as the analysis result by the processing circuit 110. More particularly, the processing circuit 110 may search for the aforementioned at least one characteristic value in the database, and may determine whether the first partial header and the mail contents of the mail are the same as that of the aforementioned at least one other mail of the aforementioned at least one other user according to whether the aforementioned at least one characteristic value is found in the database. Additionally, the database may be stored in the aforementioned at least one storage device such as the set of one or more storage devices {SD(1), SD(2), ..., SD(NS)}.

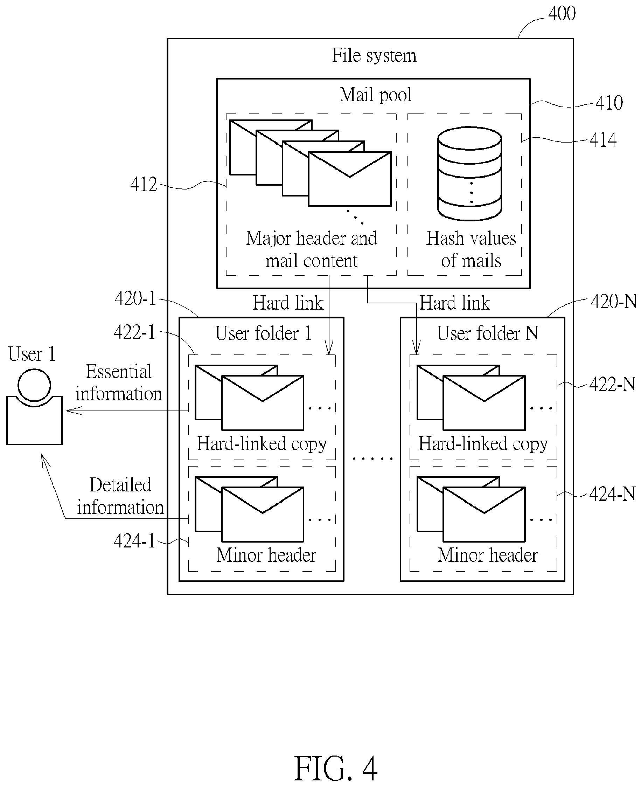

Fig. 4 illustrates a control scheme of the method 300 shown in Fig. 3 according to an embodiment of the present invention. The file system 400 may be taken as an example of the file system mentioned above, in which the mail pool 410 may be taken as an example of the mail pool mentioned in Step 330 and one of the N user folders {420-1, ..., 420-N} (labeled "User folder 1", ..., "User folder N" in Fig. 4, for better comprehension; the notation "N" may represent a positive integer greater than one) may be taken as an example of the user folder mentioned in Step 330. The mail pool 410 may store multiple sets of major header and mail content 412, and each set of the sets of major header and mail content 412 may be illustrated with a mail icon such as any of the mail icons illustrated in the mail pool 410 shown in Fig. 4. The combination of the first partial header (e.g. the major header) and the mail contents of the mail mentioned in Step 330 may be a set within the sets of major header and mail content 412. In addition, a specific user folder of the N user folders {420-1, ..., 420-N} (e.g. ant of the N user folders {420-1, ..., 420-N}) may store one or more hard-linked copies of one or more sets within the sets of major header and mail content 412 when a specific user corresponding to the specific user folder is one of the intended recipients of the mails sent to the intended recipients, and may store the minor headers of these mails. For example, the user folder 420-1 may store the hard-linked copies 422-1 when a first user (e.g. the user labeled "User 1" in Fig. 4) corresponding to the user folder 420-1 is one of the intended recipients of some mails, and may store the minor headers 424-1 of these mails. In another example, the user folder 420-N may store the hard-linked copies 422-N when an N^{th} user (e.g. "User N", not shown in Fig. 4) corresponding to the user folder 420-N is one of the intended recipients of some mails, and may store the minor headers 424-N of these mails.

According to this embodiment, the hash value of the combination of the first partial header (e.g. the major header) and the mail contents of the mail may be taken as an example of the aforementioned at least one characteristic value, and the hash values of mails (or the mail hash values) 414 may be taken as an example of the database. The processing circuit 110 may search for the hash value in the database, to determine whether the same hash value has been previously stored or recorded in the database. When the hash value is found in the database such as the hash values of mails (or the mail hash values) 414, the processing circuit 110 may determine that the first partial header (e.g. major header) and the mail contents of the mail are the same as that of the aforementioned at least one other mail of the aforementioned at least one other user.

As the one or more hard-linked copies (e.g. a corresponding set of one or more hard-linked copies within the hard-linked copies {422-1, ..., 422-N}) may be associated to the aforementioned one or more sets within the sets of major header and mail content 412 through the corresponding hard link(s), and as the one or more hard-linked copies do not include file contents of the one or more sets within the sets of major header and mail content 412, the present invention method (e.g. the method 300) and the associated apparatus (e.g. the mail system 10, the storage server 100, or the processing circuit 110) allows the specific user to access his/her mails without any need of storing the major headers and the mail contents of these mails in the specific user folder. For example, when the first user (e.g. "User 1" in Fig. 4) corresponding to the user folder 420-1 is one of the intended recipients of some mails, the first user may read any of these mails since the processing circuit 110 may combine essential information of the hard-linked copies 422-1 of these mail and detailed information of the minor headers 424-1 of these mail, to allow the first user (e.g. "User 1" in Fig. 4) to read these mails.

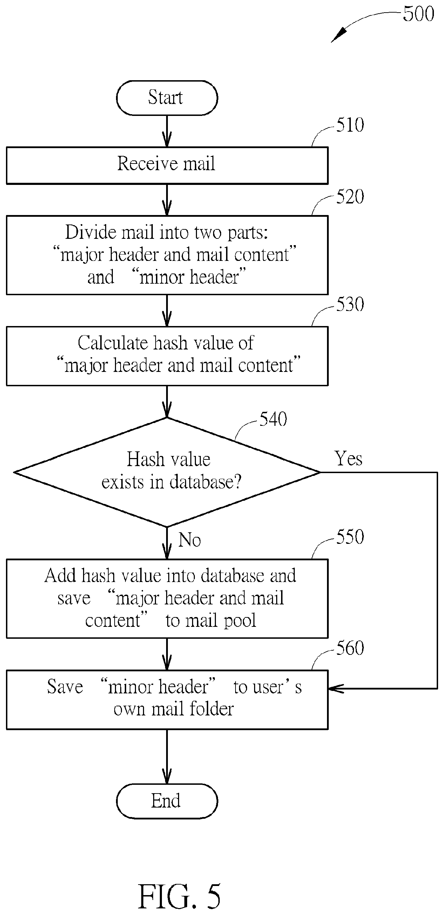

Fig. 5 illustrates a working flow 500 of the method 300 shown in Fig. 3 according to an embodiment of the present invention.

In Step 510, the processing circuit 110 may receive a mail such as the mail mentioned in Step 310.

In Step 520, the processing circuit 110 may divide the mail into two parts:
(P1). "major header and mail content", such as the combination of the first partial header (e.g. the major header) of the header of the mail and the mail contents of the mail mentioned in Step 310; and
(P2). "minor header", such as the second partial header (e.g. the minor header) mentioned in Step 330.

According to this embodiment, the multiple portions of data mentioned in Step 310 may include two portions of data. One portion of the two portions of data may include the first partial header (e.g. the major header) and the mail contents of the mail. More particularly, another portion of the two portions of data may include the second partial header (e.g. the minor header).

In Step 530, the processing circuit 110 may calculate a hash value of "major header and mail content", such as the hash value of the combination of the first partial header (e.g. the major header) of the header of the mail and the mail contents of the mail mentioned in Step 310.

In Step 540, the processing circuit 110 may check whether the hash value (i.e. the hash value mentioned in Step 530) exists in database. When the hash value exists in database, Step 560 is entered; otherwise, Step 550 is entered.

In Step 550, the processing circuit 110 may add the hash value (i.e. the hash value mentioned in Step 530) into the database and save the "major header and mail content" mentioned in Step 520 to the mail pool (e.g. the mail pool mentioned in Step 330).

In Step 560, the processing circuit 110 may save the "minor header" mentioned in Step 520 to the user's own mail folder (e.g. the user folder mentioned in Step 330).

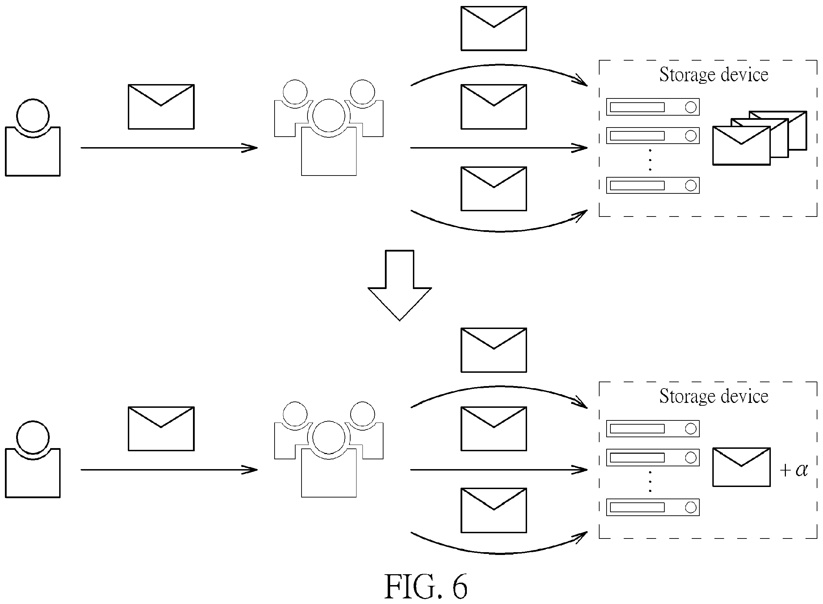

Fig. 6 illustrates, in the lower half thereof, a mail data de-duplication mechanism of the control scheme shown in Fig. 4 according to an embodiment of the present invention, and further illustrates, in the upper half thereof, a mail data duplication mechanism, for better comprehension of the mail data de-duplication mechanism. The incoming mail shown in the upper left corner of Fig. 6 and the incoming mail shown in the lower left corner of Fig. 6 may be the same. According to this embodiment, the number of recipients of the incoming mail may be equal to N (e.g. N = 3). Based on the mail data duplication mechanism shown in the upper half of Fig. 6, the N mails stored in the storage device may occupy the N-time data size that is N times the data size of the incoming mail. Based on the mail data de-duplication mechanism shown in the lower half of Fig. 6, the one mail in the storage device (e.g. the aforementioned at least one storage device), together with some additional minor header(s) and some hard links such as that shown in Fig. 4, may occupy the data size slightly greater than that of the incoming mail. For example, the present invention method (e.g. the method 300) and the associated apparatus (e.g. the mail system 10, the storage server 100, or the processing circuit 110) may directly store the aforementioned one mail and any information required for respectively presenting the same incoming mail to the N recipients (e.g. the additional minor header(s) and the hard links) into the aforementioned at least one storage device such as the set of one or more storage devices {SD(1), SD(2), ..., SD(NS)}, having no need of storing the N mails which occupy the N-time data size that is N times the data size of the incoming mail, but the present invention is not limited thereto.

As shown in the lower half of Fig. 6, the same mail as that shown around the upper left corner of Fig. 6 may be received by the mail system 10, and the associated apparatus (e.g. the mail system 10, the storage server 100, or the processing circuit 110) may perform mail data management, to store the first partial header (e.g. the major header) and the mail contents of the mail in the mail pool mentioned in Step 330 (e.g. the mail pool 410 shown in Fig. 4) and store N second partial headers (e.g. N minor headers) in N user folders (e.g. the N user folders {420-1, ..., 420-N} shown in Fig. 4). As a result, the storage space required for storing the incoming mail having N recipients may be the data size of the one mail in the storage device (e.g. the same data size of the incoming mail shown around the lower left corner of Fig. 6) plus α, in which the notation "α" may represent the summation of the data size of (N - 1) second partial headers (e.g. the additional minor header(s) such as (N - 1) minor headers) of this mail and the associated N hard links that may act as the N hard-linked copies of this mail. In comparison with the mail data duplication mechanism, the storage space required for storing the incoming mail having N recipients is greatly reduced.

According to some embodiments, the present invention method (e.g. the method 300) and the associated apparatus (e.g. the mail system 10, the storage server 100, or the processing circuit 110) may store the N mails first, and further reduce the data size of the N mails with aid of the control scheme shown in Fig. 4 by storing the aforementioned one mail and the information required for respectively presenting the same incoming mail to the N recipients (e.g. the additional minor header(s) and the hard links) into the aforementioned at least one storage device such as the set of one or more storage devices {SD(1), SD(2), ..., SD(NS)}.

According to some embodiments, regarding the operation of Step 330, when the first partial header and the mail contents of the mail are the same as that of the aforementioned at least one other mail of the aforementioned at least one other user, the processing circuit 110 may store the second partial header (e.g. the minor header) of the header into the user folder corresponding to the user (e.g. one of the N user folders {420-1, ..., 420-N} shown in Fig. 4) as the individual mail data and may store the first partial header (e.g. the major header) and the mail contents of the mail into the mail pool (e.g. the mail pool 410 shown in Fig. 4) as the common mail data, to prevent keeping both of entirety of the mail of the user and entirety of the aforementioned at least one other mail of the aforementioned at least one other user.

According to some embodiments, regarding the operation of Step 330, when the first partial header and the mail contents of the mail are the same as that of the aforementioned at least one other mail of the aforementioned at least one other user, the processing circuit 110 may store the first partial header (e.g. the major header) and the mail contents of the mail into the mail pool (e.g. the mail pool 410 shown in Fig. 4) as the common mail data, rather than storing the entirety of the mail of the user into the user folder corresponding to the user (e.g. one of the N user folders {420-1, ..., 420-N} shown in Fig. 4).

According to some embodiments, the processing circuit 110 may store a file including the combination of the first partial header (e.g. the major header) and the mail contents of the mail into the mail pool (e.g. the mail pool 410 shown in Fig. 4), to store the first partial header and the mail contents of the mail into the mail pool (e.g. the mail pool 410 shown in Fig. 4) as the common mail data. In addition, the processing circuit 110 may generate a hard link in the user folder corresponding to the user (e.g. one of the N user folders {420-1, ..., 420-N} shown in Fig. 4), to allow the user access the first partial header (e.g. the major header) and the mail contents of the mail through the hard link, where the hard link is linked to the file including the combination of the first partial header and the mail contents in the mail pool.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing mail data management in a mail system (10), the mail system (10) comprising at least one server (100), the method **characterized by**:
dividing mail data of a mail of a user into multiple portions of data to obtain a first partial header of a header of the mail and mail contents of the mail from the mail data of the mail, wherein the user is one of a plurality of users of the mail system (10), and the mail is accessed through the mail system (10);
determining whether the first partial header and the mail contents of the mail are the same as that of at least one other mail of at least one other user within the plurality of users; and
when the first partial header and the mail contents of the mail are the same as that of the at least one other mail of the at least one other user, storing a second partial header of the header into a user folder corresponding to the user as individual mail data and storing the first partial header and the mail contents of the mail into a mail pool as common mail data, wherein the mail pool and the user folder are different folders of a file system of the at least one server (100).

2. The method of claim 1, **characterized in that** an incoming mail sent from outside the mail system (10) comprises the mail of the user; and the step of determining whether the first partial header and the mail contents of the mail are the same as that of the at least one other mail of the at least one other user within the plurality of users further comprises:
when the at least one server (100) receives the incoming mail from outside the mail system (10), determining whether the first partial header and the mail contents of the mail are the same as that of the at least one other mail according to the first partial header.

3. The method of claim 1 or 2, **characterized in that** the first partial header comprises one or a combination of sender information of a sender of the mail, receiver information of at least one recipient of the mail, a subject of the mail, and time information of time that the sender sends the mail.

4. The method of claim 1 or 2, **characterized in that** the step of determining whether the first partial header and the mail contents of the mail are the same as that of the at least one other mail of the at least one other user within the plurality of users further comprises:
analyzing the first partial header and the mail contents of the mail to generate an analysis result; and
based on a database of the mail system (10), determining whether the first partial header and the mail contents of the mail are the same as that of the at least one other mail of the at least one other user according to the analysis result.

5. The method of claim 4, **characterized in that** regarding the analysis result generated by analyzing the first partial header and the mail contents of the mail, at least one characteristic value of both of the first partial header and the mail contents of the mail is obtained; and the step of analyzing the first partial header and the mail contents of the mail to generate the analysis result further comprises:
utilizing the at least one characteristic value as the analysis result.

6. The method of claim 5, **characterized in that** the step of determining whether the first partial header and the mail contents of the mail are the same as that of the at least one other mail of the at least one other user according to the analysis result further comprises:
searching for the at least one characteristic value in the database, and determining whether the first partial header and the mail contents of the mail are the same as that of the at least one other mail of the at least one other user according to whether the at least one characteristic value is found in the database.

7. The method of claim 6, **characterized in that** the at least one characteristic value comprises one or a combination of a hash value and a checksum.

8. The method of claim 1, **characterized in that** the multiple portions of data comprises two portions of data, wherein one portion of the two portions of data comprises the first partial header and the mail contents of the mail, and another portion of the two portions of data comprises the second partial header.

9. The method of claim 1, **characterized in that** the step of storing the second partial header of the header into the user folder corresponding to the user as the individual mail data and storing the first partial header and the mail contents of the mail into the mail pool as the common mail data further comprises:
when the first partial header and the mail contents of the mail are the same as that of the at least one other mail of the at least one other user, storing the second partial header of the header into the user folder corresponding to the user as the individual mail data and storing the first partial header and the mail contents of the mail into the mail pool as the common mail data, to prevent keeping both of entirety of the mail of the user and entirety of the at least one other mail of the at least one other user; or storing the first partial header and the mail contents of the mail into the mail pool as the common mail data, rather than storing entirety of the mail of the user into the user folder corresponding to the user.

10. The method of claim 1, **characterized in that** the method further comprises:
storing a file comprising a combination of the first partial header and the mail contents of the mail into the mail pool, to store the first partial header and the mail contents of the mail into the mail pool as the common mail data; and
generating a hard link in the user folder corresponding to the user, to allow the user access the first partial header and the mail contents of the mail through the hard link, wherein the hard link is linked to the file comprising the combination of the first partial header and the mail contents in the mail pool.

11. An apparatus for performing mail data management in a mail system (10), the mail system (10) comprising at least one server (100), the apparatus **characterized by**:
a processing circuit (110), positioned in the at least one server (100), arranged to control operations of the mail system (10), wherein controlling the operations of the mail system (10) comprises:
dividing mail data of a mail of a user into multiple portions of data to obtain a first partial header of a header of the mail and mail contents of the mail from the mail data of the mail, wherein the user is one of a plurality of users of the mail system (10), and the mail is accessed through the mail system (10);
determining whether the first partial header and the mail contents of the mail are the same as that of at least one other mail of at least one other user within the plurality of users; and
when the first partial header and the mail contents of the mail are the same as that of the at least one other mail of the at least one other user, storing a second partial header of the header into a user folder corresponding to the user as individual mail data and storing the first partial header and the mail contents of the mail into a mail pool as common mail data, wherein the mail pool and the user folder are different folders of a file system of the at least one server (100).

12. The apparatus of claim 11, **characterized in that** an incoming mail sent from outside the mail system (10) comprises the mail of the user; and when the at least one server (100) receives the incoming mail from outside the mail system (10), the processing circuit (110) is arranged to determine whether the first partial header and the mail contents of the mail are the same as that of the at least one other mail according to the first partial header.

13. The apparatus of claim 11 or 12, **characterized in that** the processing circuit (110) is arranged to analyze the first partial header and the mail contents of the mail to generate an analysis result; and based on a database of the mail system (10), the processing circuit (110) is arranged to determine whether the first partial header and the mail contents of the mail are the same as that of the at least one other mail of the at least one other user according to the analysis result.

14. The method of claim 1 or the apparatus of claim 11, **characterized in that** the first partial header comprises one or a combination of sender information of a sender of the mail, receiver information of at least one recipient of the mail, a subject of the mail, and time information of time that the sender sends the mail.

15. The method or the apparatus of claim 14, **characterized in that** the second partial header comprises other information of the header, or that the second partial header comprises information regarding at least one operation that the at least one server (100) applies to the mail.
